# EUROPEAN PATENT APPLICATION

(11) **EP 4 836 159 A1**
(43) Date of publication of application: **04.11.2026**
(21) Application number: 25913252.0
(22) Date of filing: 20.10.2025
(51) Int. Cl.: H01M 50/383, H01M 50/367, H01M 50/375, H01M 10/42, H01M 10/48

(54) **BATTERY PACK AND OPERATING METHOD THEREFOR**

(30) Priority: 23.12.2024 KR 20240194356
(71) Applicant: LG Energy Solution, Ltd., Seoul 07335 (KR)
(72) Inventor: LEE, Yong Hun, Daejeon 34122 (KR); SEO, Sung Won, Daejeon 34122 (KR); AHN, Moon Youl, Daejeon 34122 (KR); LEE, Sang Joon, Daejeon 34122 (KR)
(74) Representative: Plasseraud IP
(86) International application number: PCT/KR2025/016636
(87) International publication number: WO 2026/141895

(57) **Abstract**

The disclosed battery pack includes: a lower plate; a side wall surrounding the lower plate; a support plate spaced apart from the lower plate to form a venting flow path and having venting holes; battery cell assemblies disposed on the support plate; and a nitrogen gas system including a liquid nitrogen tank, a vaporizer, and a plurality of nitrogen gas injection ports. The plurality of nitrogen gas injection ports may be disposed on at least one of the lower plate and the support plate.

## Description

### [Technical Field]

The present disclosure relates to a battery pack and an operating method thereof, and more particularly, to a battery pack that delays and suppresses thermal propagation and an operating method thereof.

This application claims the benefit of Korean Patent Application No. 10-2024-0194356, filed on December 23, 2024, the disclosure of which is incorporated herein by reference.

### [Background]

Secondary batteries, unlike primary batteries, can be charged and discharged multiple times. Secondary batteries are widely used as energy sources for various wireless devices such as handsets, laptops, and cordless vacuum cleaners. Recently, due to improved energy density and economies of scale, the manufacturing cost per unit capacity of secondary batteries has dramatically decreased, and as the driving range of BEVs (battery electric vehicles) has increased to levels comparable to fuel vehicles, the main applications of secondary batteries are shifting from mobile devices to mobility.

The trend in technology development for mobility secondary batteries is the improvement of energy density and safety. The safety of mobility secondary batteries is extremely important as it is directly linked to passenger lives. The safety of secondary batteries can be achieved through mechanical robustness, reliability of electrical insulation, and delayed heat transfer when thermal runaway events occur.

### [Summary]

### [Technical Problem]

The first objective of the technical concept of the present disclosure is to provide a battery pack that delays and suppresses thermal events.

The second objective of the technical concept of the present disclosure is to provide an operating method of a battery pack that delays and suppresses thermal events.

However, the technical problems to be solved by the present disclosure are not limited to the above-mentioned problems, and other unmentioned problems can be clearly understood by those skilled in the art from the description of the disclosure described below.

### [Technical Solution]

The present disclosure relates to a battery pack, and in one embodiment, includes: a lower plate; a side wall surrounding the lower plate; a support plate spaced apart from the lower plate to form a venting flow path and having venting holes; battery cell assemblies disposed on the support plate; and a nitrogen gas system including a liquid nitrogen tank, a vaporizer, and a plurality of nitrogen gas injection ports. The plurality of nitrogen gas injection ports may be disposed on at least one of the lower plate and the support plate.

In some embodiments, the battery pack may further include a venting device inserted through the side wall, wherein the side wall has a hollow passage therein, and the hollow passage may be connected to the venting flow path and the venting device.

In some embodiments, the plurality of nitrogen gas injection ports may include upper front injection ports. The upper front injection ports may be disposed between the venting device and the battery cell assemblies on the support plate.

In some embodiments, the plurality of nitrogen gas injection ports may include lower front injection ports. The lower front injection ports may be disposed between the venting device and the battery cell assemblies on the lower plate.

In some embodiments, the plurality of nitrogen gas injection ports may include upper side injection ports. The upper side injection ports may be disposed between the side wall and the battery cell assemblies on the support plate.

In some embodiments, the plurality of nitrogen gas injection ports may include lower side injection ports. The lower side injection ports may be disposed between the side wall and the battery cell assemblies on the lower plate.

In some embodiments, the plurality of nitrogen gas injection ports may include center injection ports. The center injection ports may be disposed on a line extending from the center of the lower plate.

In some embodiments, the battery pack may further include a battery management system configured to control the nitrogen gas system based on at least one of voltage and temperature of the battery cell assemblies.

In some embodiments, when at least one of the voltage and temperature of the battery cell assemblies exceeds a threshold, the battery management system may be configured to operate the venting device, vaporize the liquid nitrogen stored in the liquid nitrogen tank through the vaporizer, and spray it through the plurality of nitrogen gas injection ports.

In some embodiments, the battery pack may further include connection pipes connecting the vaporizer and the nitrogen gas injection ports. The connection pipes may be disposed in the venting flow path.

The present disclosure relates to a method of operating the aforementioned battery pack, including: discharging venting gas generated from at least one of the battery cell assemblies to the outside of the battery pack through a venting device inserted through the side wall; and spraying nitrogen gas through front nitrogen gas injection ports disposed between the venting device and the battery cell assemblies on either the support plate or the lower plate among the plurality of nitrogen gas injection ports.

In some embodiments, the battery pack operating method may further include discharging nitrogen gas by at least one nitrogen gas injection port disposed in a direction opposite to the venting device direction from the at least one of the battery cell assemblies.

In some embodiments, the battery pack may further include a battery management system configured to control the nitrogen gas system based on at least one of voltage and temperature of the battery cell assemblies. The steps of discharging the venting gas and spraying the nitrogen gas may be controlled by the battery management system.

### [Advantageous Effects]

The battery pack of the present disclosure can reduce the concentration of oxygen entering through the venting device. Accordingly, thermal propagation in the battery pack can be delayed and suppressed, and the safety of the battery pack can be improved.

The battery pack of the present disclosure can delay and suppress thermal propagation in the battery pack by rapidly discharging venting gas, and can improve the safety of the battery pack.

However, the technical effects obtainable through the present disclosure are not limited to the above-mentioned effects, and other unmentioned effects can be clearly understood by those skilled in the art from the description of the disclosure described below.

### [Brief Description of the Drawings]

The following drawings attached to this specification illustrate preferred embodiments of the present disclosure and, together with the detailed description of the disclosure described below, serve to further understand the technical idea of the present disclosure, so the present disclosure should not be interpreted as being limited only to matters described in such drawings.
FIG. 1 is a perspective view of a battery pack according to an exemplary embodiment of the present disclosure.
FIG. 2 is a front view of the battery pack of FIG. 1 according to an exemplary embodiment of the present disclosure.
FIG. 3 is a cross-sectional view along line A-A' of the battery pack of FIG. 1 according to an exemplary embodiment of the present disclosure.
FIG. 4 is a cross-sectional view along line B-B' of the battery pack of FIG. 1 according to an exemplary embodiment of the present disclosure.
FIG. 5 is a front view of a battery pack including a battery management system and a nitrogen gas system according to an exemplary embodiment of the present disclosure.
FIG. 6 is a block diagram of a nitrogen gas system according to an exemplary embodiment of the present disclosure.
FIG. 7 is a flowchart of an operating method of a battery pack according to an exemplary embodiment of the present disclosure.
FIG. 8 is a flowchart of an operating method of a battery pack according to an exemplary embodiment of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best explain his disclosure.

Accordingly, it is to be understood that the embodiments described herein and the configurations shown in the drawings are only the most preferred embodiments of the disclosure and do not represent all of the technical ideas of the disclosure, and that there may be various equivalents and modifications that may be substituted for them at the time of filing the present application.

Furthermore, in describing the disclosure, specific descriptions of relevant disclosed configurations or features are omitted where it is believed that such detailed description would obscure the essence of the disclosure.

Because the embodiments of the present disclosure are provided to more fully illustrate the disclosure to those of ordinary skill in the art, the shapes and sizes of the components in the drawings may be exaggerated, omitted, or shown schematically for clarity. Accordingly, the size or proportion of each component is not necessarily indicative of its actual size or proportion.

### [First embodiment]

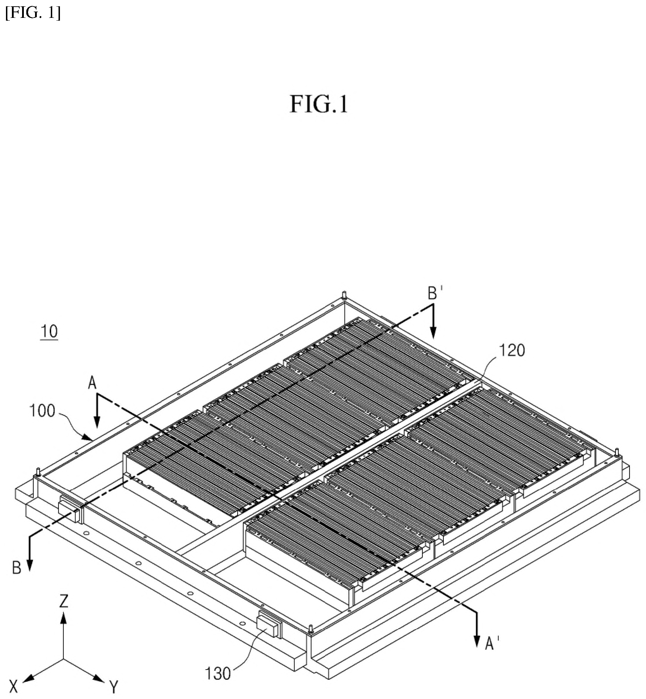

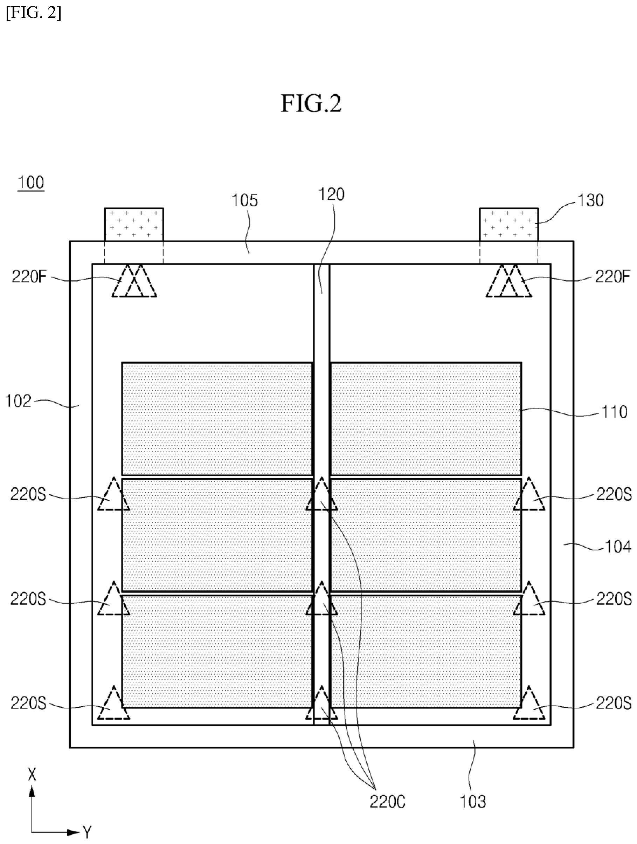

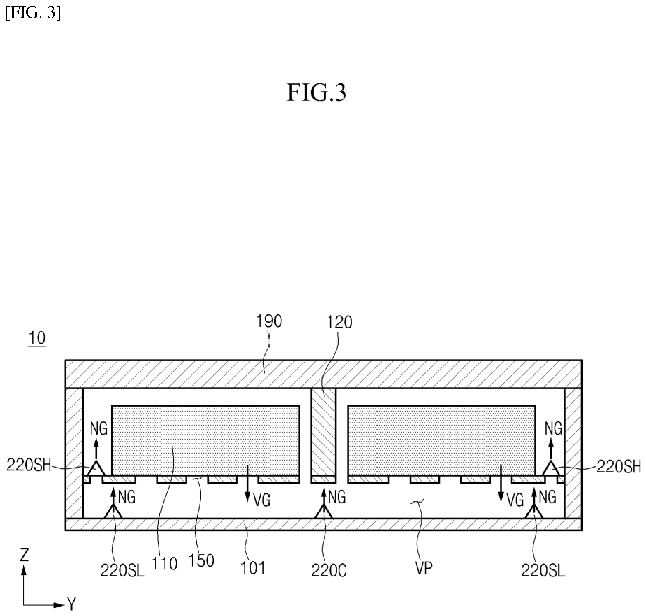

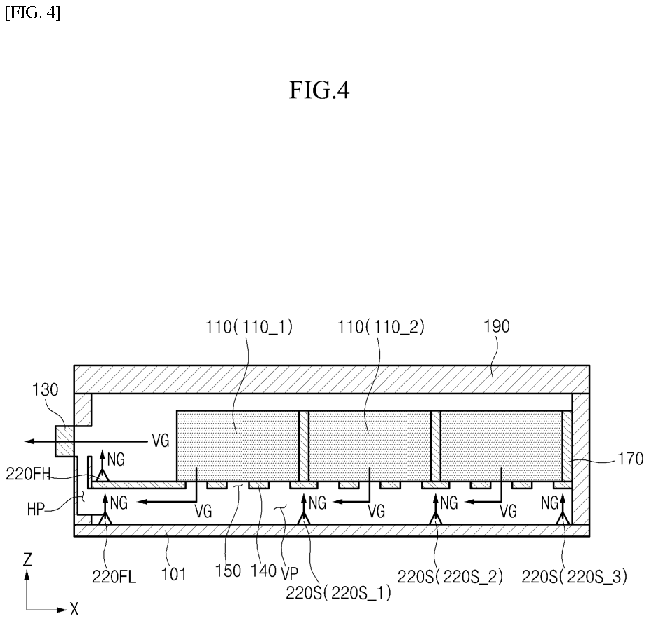

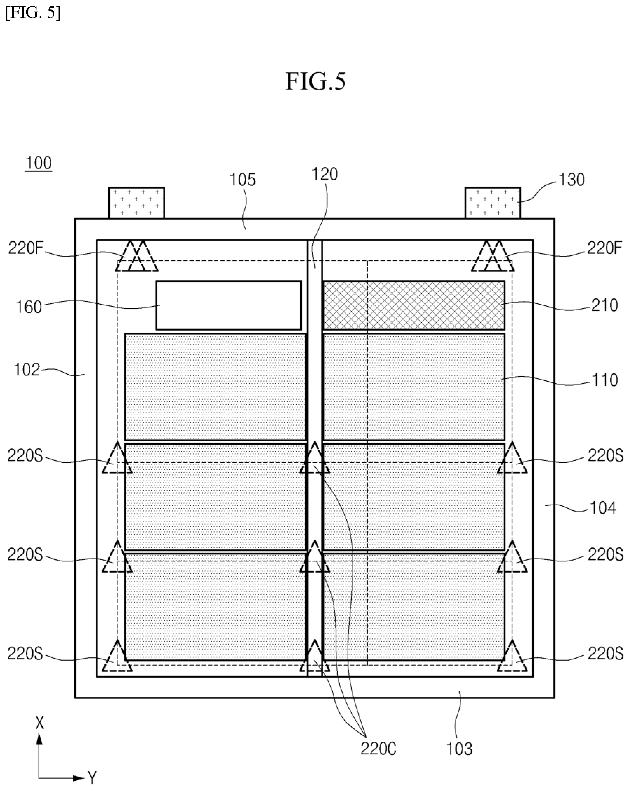

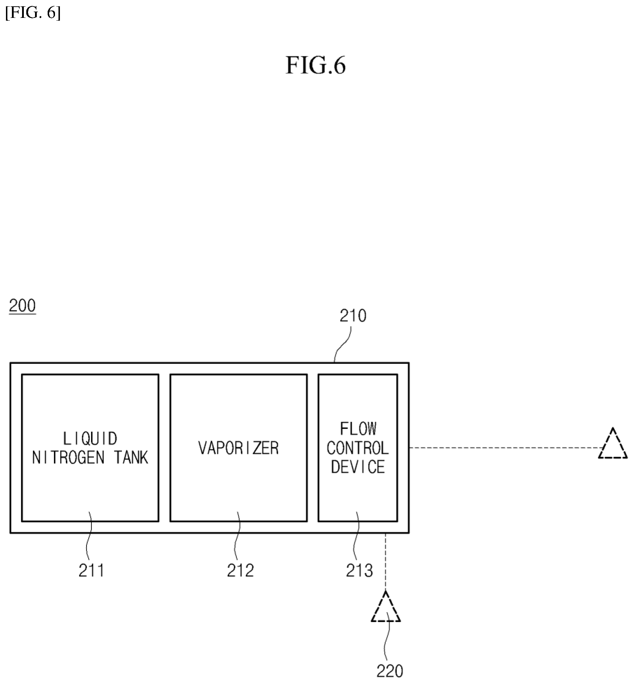

FIG. 1 is a perspective view of a battery pack according to an exemplary embodiment of the present disclosure. FIG. 2 is a front view of the battery pack of FIG. 1 according to an exemplary embodiment of the present disclosure. FIG. 3 is a cross-sectional view along line A-A' of the battery pack of FIG. 1 according to an exemplary embodiment of the present disclosure. FIG. 4 is a cross-sectional view along line B-B' of the battery pack of FIG. 1 according to an exemplary embodiment of the present disclosure. FIG. 5 is a front view of a battery pack according to an exemplary embodiment of the present disclosure. FIG. 6 is a block diagram of a nitrogen gas system according to an exemplary embodiment of the present disclosure.

Referring to FIGS. 1 to 5 together, a battery pack 10 according to an exemplary embodiment of the present disclosure includes a lower plate 101, side walls 102, 103, 104, 105 surrounding the lower plate 101, a support plate 140 spaced apart from the lower plate 101 to form a venting flow path VP and having venting holes 150, battery cell assemblies 110 disposed on the support plate 140, and a nitrogen gas system 200. In some embodiments, a plurality of nitrogen gas injection ports 220 may be disposed on at least one of the lower plate 101 and the support plate 140. The illustrations of the battery management system 160 and the sub nitrogen gas system 210 may be omitted in FIGS. 1 to 4.

In some embodiments, the battery pack 10 may further include a venting device 130 inserted through the side wall 105. The side wall 105 may have a hollow passage HP therein. The hollow passage HP may be connected to the venting flow path VP and the venting device 130. Specifically, one end of the hollow passage HP is in fluid communication with the venting flow path VP, and the other end of the hollow passage HP may be in fluid communication with the venting device 130. The location and number of venting devices 130 may vary and are not limited to the embodiments disclosed in FIGS. 1 to 5.

The battery pack 10 according to an exemplary embodiment of the present disclosure may include a lower case 100 and an upper case 190. The lower case 100 may include a lower plate 101, a support plate 140, and side walls 102, 103, 104, 105 surrounding the lower plate 101. The side walls 102, 103, 104, 105 may also surround the support plate 140. The upper case 190 may close the upper surface of the accommodation space defined by the support plate 140 and the side walls 102, 103, 104, 105. In some embodiments, the upper case 190 may be coupled with the lower case 100. In some embodiments, the upper case 190 may be welded to the lower case 100.

The side walls 102, 103, 104, 105 may be coupled to the lower plate 101. The side walls 102, 103, 104, 105 may be welded to the lower plate 101. Each of the side walls 102, 103, 104, 105 may be perpendicular to the lower plate 101. The side walls 102, 104 may be substantially perpendicular to the Y direction. The side walls 103, 105 may be substantially perpendicular to the X direction.

The support plate 140 has strength sufficient to support the load of a plurality of battery cell assemblies 110, which are heavy objects. In some embodiments, the plurality of battery cell assemblies 110 may be aligned with the venting holes 150 of the support plate 140 to implement directional venting. Accordingly, when a thermal event such as thermal runaway occurs in any of the battery cell assemblies 110, venting gas VG, high-temperature particles such as sparks, flames, etc. are discharged through the venting holes 150 assigned to the corresponding battery cell assemblies 110 into the venting flow path VP. In some embodiments, when the battery cell assemblies 110 are mounted on a frame, a plurality of through-holes (not shown) may be included at the lower part of the frame. The through-holes may be aligned to match the venting holes 150. A large amount of venting gas VG, high-temperature particles, and flames due to thermal events occurring in any battery cell of the battery cell assemblies 110 may be guided to move to the venting flow path VP through the through-holes and venting holes 150. In some embodiments, when the battery cells of the battery cell assemblies 110 are directly mounted on the support plate 140, a large amount of venting gas VG, high-temperature particles, and flames due to thermal events occurring in any battery cell of the battery cell assemblies 110 may be guided to move to the venting holes 150 and the venting flow path VP.

The lower plate 101 corresponds to a plate-shaped member forming the bottom surface of the lower case 100. The lower plate 101 is spaced apart below the support plate 140 to create a space between them, and this space forms the venting flow path VP. That is, the venting gas VG generated in the battery cell assembly 110 mounted on the support plate 140 flows downward through the venting holes 150, and this venting gas VG can be finally discharged to the outside of the battery pack 10 through the venting device 130 via the space (venting flow path VP) between the lower plate 101 and the support plate 140 and the hollow passage HP inside the side wall 105.

Each of the battery cell assemblies 110 refers to a battery cell assembly in which a plurality of battery cells are structurally and electrically connected. Depending on how the plurality of battery cells are structurally bound, the battery cell assembly 110 may be referred to by various terms such as battery module, battery block, battery unit, etc. The battery cell assembly 110 may mean one battery cell assembly or a plurality of battery cell assemblies depending on the context.

In some embodiments, the battery cell assembly 110 of the present disclosure may have a Cell-To-Pack (CTP) structure that is bound with minimal structure and directly mounted to the pack case without a modular structure that contains a plurality of battery cells in a housing. In some embodiments, the battery cell assembly 110 of the present disclosure may be a battery module in which a plurality of battery cells are mounted in a closed housing. The lower case 100 of the present disclosure is not restrictively applied only to battery cell assemblies 110 of a specific structure. Referring to FIG. 1, although the battery cell assembly 110 is represented as a battery cell assembly 110 with a cell-to-pack structure, the battery cell assembly 110 of the present disclosure is not limited to a cell-to-pack structure.

Each of the plurality of battery cells of the battery cell assembly 110 may be a lithium-ion battery. Each of the plurality of battery cells includes an electrode assembly, an electrolyte, and a case. Each of the plurality of battery cells may be any one of a cylindrical battery cell, a prismatic battery cell, and a pouch-type battery cell. The electrode assembly of the cylindrical battery cell is embedded in a cylindrical metal can. The electrode assembly of the prismatic battery cell is embedded in a prismatic metal can. The electrode assembly of the pouch-type battery cell is embedded in a pouch case including an aluminum laminate sheet.

In some embodiments, each of the plurality of battery cells may be any one of a lithium-ion battery, a lithium-ion polymer battery, and a lithium polymer battery.

Referring to FIGS. 2 and 4, in some embodiments, the plurality of nitrogen gas injection ports 220 may include front injection ports 220F. The front injection ports 220F may include upper front injection ports 220FH and lower front injection ports 220FL. The upper front injection ports 220FH may be disposed between the venting device 130 and the battery cell assembly 110 on the support plate 140. The lower front injection ports 220FL may be disposed between the venting device 130 and the battery cell assembly 110 on the lower plate 101. The lower front injection ports 220FL may be disposed between the venting device 130 and the battery cell assembly 110 on the lower plate 101 and below the support plate 140. By disposing the front injection ports 220F between the venting device 130 and the battery cell assembly 110, nitrogen gas (NG) can be sprayed near the venting device 130. Specifically, the lower front injection ports 220FL can block oxygen entering from the venting device 130 by spraying nitrogen gas (NG) near the hollow passage HP of the side wall 105 on the lower plate 101. The upper front injection ports 220FH can block oxygen entering from the venting device 130 by spraying nitrogen gas (NG) near the venting device 130 on the support plate 140. More specifically, the lower front injection ports 220FL and upper front injection ports 220FH can block oxygen entering the battery pack 10 from the venting device 130 by spraying nitrogen gas (NG) after the venting gas (VG) is discharged through the venting device 130 or immediately upon discharge when a thermal event occurs in at least one battery cell assembly 110.

In some embodiments, the lower front injection ports 220FL and upper front injection ports 220FH may be greater in number than injection ports disposed at other locations. Accordingly, oxygen entering from the venting device 130 can be effectively blocked.

Referring to FIGS. 2 and 3, in some embodiments, the plurality of nitrogen gas injection ports 220 may include side injection ports 220S. The side injection ports 220S may include upper side injection ports 220SH and lower side injection ports 220SL. The upper side injection ports 220SH may be disposed between the side wall 102 and the battery cell assemblies 110 on the support plate 140. The lower side injection ports 220SL may be disposed between each of the side walls 102, 104 and the battery cell assemblies 110 on the lower plate 101. More specifically, the lower side injection ports 220SL may be disposed between each of the side walls 102, 104 and the battery cell assemblies 110 on the lower plate 101 and below the support plate 140.

In some embodiments, at least one of a cooling flow path, cooling tube, and cooling pipe through which coolant can flow may be disposed in the space between each of the side walls 102, 104 where the side injection ports 220S are disposed and the battery cell assemblies 110. At least one of the cooling flow path, cooling tube, and cooling pipe may be disposed in the space between each of the side walls 102, 104 and the battery cell assemblies 110 to supply coolant entering from outside the battery pack 10 to the inside of the battery cell assembly 110. In some embodiments, the coolant may have high thermal conductivity and insulating properties. The coolant may include one or more of mineral oil, synthetic oil, silicone oil, and fluorinated fluid. The coolant may also include deionized water.

Referring to FIGS. 2 and 3, in some embodiments, the plurality of nitrogen gas injection ports 220 may include center injection ports 220C. The center injection ports 220C may be disposed on a line extending from the center of the lower plate 101. Specifically, the center injection ports 220C may be disposed on a line corresponding to the center beam 120 on the lower plate 101. The center injection ports 220C may be disposed on a line corresponding to the center beam 120 on the lower plate 101 and below the support plate 140.

Referring to FIGS. 5 and 6, in some embodiments, the nitrogen gas system 200 may include a sub nitrogen gas system 210 and a plurality of nitrogen gas injection ports 220. The nitrogen gas system 200 may further include a plurality of connection pipes physically connecting the sub nitrogen gas system 210 and the nitrogen gas injection ports 220. Nitrogen gas (NG) moves from the sub nitrogen gas system 210 to the nitrogen gas injection ports 220 through the plurality of connection pipes and can be sprayed (or discharged) through the nitrogen gas injection ports 220. Referring to FIGS. 5 and 6, the connection pipes may be indicated by dotted lines. The connection pipes may include metal and/or plastic.

In some embodiments, the connection pipes may be disposed in the venting flow path VP, that is, in the space between the lower plate 101 and the support plate 140.

The sub nitrogen gas system 210 may include a liquid nitrogen tank 211, a vaporizer 212, and a flow control device 213. The liquid nitrogen tank 211 can store liquid nitrogen at cryogenic temperature. In some embodiments, the liquid nitrogen tank 211 may have a double-wall structure. The vaporizer 212 can convert liquid nitrogen to gaseous nitrogen. In some embodiments, the vaporizer 212 may include at least one of an ambient air vaporizer and an electric vaporizer. In some embodiments, the vaporizer 212 may convert liquid nitrogen to gaseous nitrogen using heat from the battery cell assembly 110. The flow control device 213 may be configured to control the flow rate of nitrogen gas (NG). In some embodiments, the flow control device 213 may control the flow rate so that a large amount of nitrogen gas is sprayed through the front injection ports 220F. The nitrogen gas system 200 may further include components for spraying liquid nitrogen inside the battery pack 10, and its configuration is not limited to the above-mentioned components.

Referring to FIG. 5, the battery pack 10 may further include electrical components. In some embodiments, the electrical components may be mounted on the lower case 100. In some embodiments, the electrical components may be disposed between the side wall 105 where the venting device 130 is installed and the plurality of battery cell assemblies 110. In some embodiments, the electrical components may include any electronic elements necessary to drive the battery pack 10.

In some embodiments, the electrical components may include, for example, a battery management system (BMS) 160. The BMS may be configured to perform monitoring, balancing, and control of the battery pack. In some embodiments, monitoring of the battery pack 10 may include measuring voltage and current of specific nodes inside the plurality of battery cell assemblies 110 and measuring temperature of set locations inside the battery pack 10. In some embodiments, the battery pack 10 may include instruments for measuring the aforementioned voltage, current, and temperature.

In some embodiments, the battery pack 10 may further include a battery management system 160 configured to control the nitrogen gas system based on at least one of voltage and temperature of the battery cell assembly 110. In some embodiments, when at least one of the voltage and temperature of the battery cell assembly 110 exceeds a threshold, the battery management system 160 may be configured to operate the venting device 130, vaporize the liquid nitrogen stored in the liquid nitrogen tank 211 through the vaporizer 212, and spray it through the plurality of nitrogen gas injection ports 220.

Balancing of the battery pack 10 is an operation to reduce voltage deviation between the plurality of battery cell assemblies 110. Control of the battery pack 10 includes preventing occurrence of overcharge, over-discharge, and overcurrent. Through monitoring, balancing, and control, the battery pack 10 can operate under optimal conditions, thereby preventing or reducing the life shortening of each of the plurality of battery cell assemblies 110.

The electrical components may further include a PRA (power relay assembly), a safety plug, etc. The PRA may be configured to supply or cut off power from the high-voltage battery to an external load (e.g., a vehicle motor). The PRA can protect the plurality of battery cell assemblies 110 and the external load (e.g., a vehicle motor) by cutting off power supply to the external load in situations where abnormal voltages such as voltage surges occur.

### [Second Embodiment]

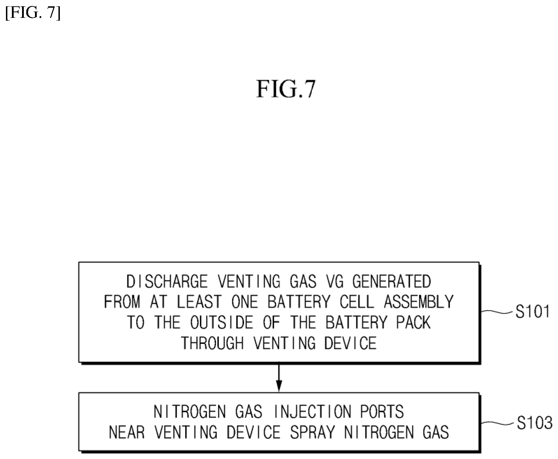

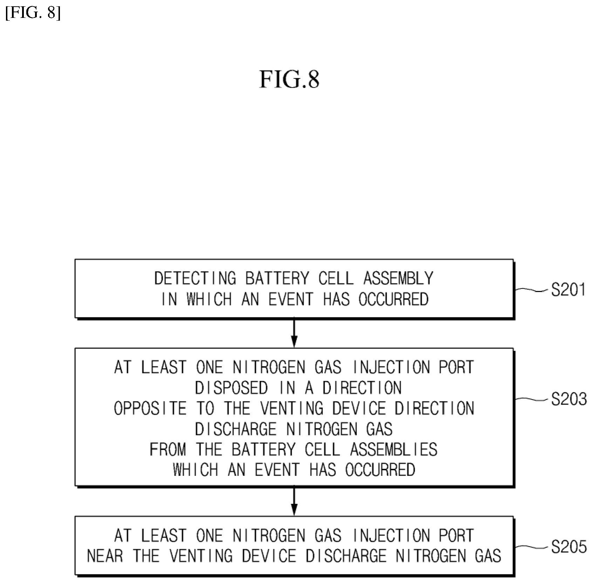

FIG. 7 is a flowchart of an operating method of a battery pack according to an exemplary embodiment of the present disclosure. FIG. 8 is a flowchart of an operating method of a battery pack according to an exemplary embodiment of the present disclosure.

FIGS. 7 and 8 can be described with reference to FIGS. 1 to 6, and redundant descriptions may be omitted. Referring to FIG. 7, in step S101, the battery pack 10 can discharge venting gas (VG) generated from at least one battery cell assembly 110 to the outside of the battery pack 10 through the venting device 130.

In some embodiments, the battery pack 10 can discharge venting gas (VG) to the outside of the battery pack 10 through the venting device 130 inserted through the side wall 105.

In some embodiments, the battery management system 160 may control the venting device 130 based on at least one of voltage and temperature of the battery cell assembly 110. For example, when a thermal event occurs and the voltage and/or temperature of the battery cell assembly 110 is above a threshold, the battery management system 160 may receive signals for voltage and temperature from instruments for the battery cell assembly 110 and operate the venting device 130 in response.

In step S103, nitrogen gas injection ports 220 near the venting device 130 may spray nitrogen gas (NG).

In some embodiments, among the plurality of nitrogen gas injection ports 220, front nitrogen gas injection ports 220F disposed between the venting device 130 and the battery cell assemblies 110 on either the support plate 140 or the lower plate 101 may spray nitrogen gas (NG).

In some embodiments, when a thermal event occurs and the voltage and/or temperature of the battery cell assembly 110 is above a threshold, the battery management system 160 may receive signals for voltage and/or temperature from instruments for the battery cell assembly 110 and control the nitrogen gas system 200 in response. For example, when a thermal event occurs and the voltage and/or temperature of the battery cell assembly 110 is above a threshold, the battery management system 160 may control the nitrogen gas system 200 to vaporize the liquid nitrogen stored in the liquid nitrogen tank 211 through the vaporizer 212 and spray it through the front nitrogen gas injection ports 220F.

Referring to FIG. 8, in step S201, the battery pack 10 may detect the battery cell assembly 110 in which an event has occurred. In some embodiments, when a thermal event occurs and the voltage and/or temperature of the battery cell assembly 110 is above a threshold, the battery management system 160 may receive signals for voltage and/or temperature from instruments for the battery cell assembly 110.

In step S203, among the plurality of nitrogen gas injection ports 220, at least one nitrogen gas injection port 220 disposed in a direction opposite to the venting device 130 direction from the battery cell assemblies 110 may discharge nitrogen gas (NG). Referring also to FIG. 4, when a thermal event occurs in battery cell assembly 110_1, nitrogen gas injection ports 220S_1, 220S_2, 220S_3 disposed in the direction opposite to the venting device 130 direction (i.e., the direction in which venting gas (VG) flows in the venting flow path VP) from battery cell assembly 110_1 (i.e., the Y direction) may discharge nitrogen gas (NG). Accordingly, venting gas (VG) can be discharged more quickly through the venting device 130 due to the pressure of nitrogen gas (NG).

In some embodiments, among at least one nitrogen gas injection port 220 disposed in the direction opposite to the venting device 130 direction from the battery cell assembly 110 in which the event occurred, at least one nitrogen gas injection port 220 closest to the battery cell assembly 110 in which the event occurred may discharge nitrogen gas (NG). Then, the venting device 130 may discharge the venting gas (VG). Referring also to FIG. 4, when a thermal event occurs in battery cell assembly 110_1, among nitrogen gas injection ports 220S_1, 220S_2, 220S_3 disposed in the direction opposite to the venting device 130 direction from battery cell assembly 110_1, nitrogen gas injection port 220S_1 closest to battery cell assembly 110_1 may discharge nitrogen gas (NG). Accordingly, venting gas (VG) can be discharged more quickly through the venting device 130 due to the pressure of nitrogen gas (NG).

In some embodiments, the operation of the venting device 130 discharging venting gas (VG) and the operation of the at least one nitrogen gas injection port 220 discharging nitrogen gas (NG) may be performed simultaneously. In some embodiments, the operation of the venting device 130 discharging venting gas (VG) may precede the operation of the at least one nitrogen gas injection port 220 discharging nitrogen gas (NG).

In step S205, at least one nitrogen gas injection port 220 near the venting device 130 may discharge nitrogen gas. In some embodiments, the at least one nitrogen gas injection port 220 near the venting device 130 may be front injection ports 220F.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A battery pack comprising:
a lower plate;
a side wall surrounding the lower plate;
a support plate spaced apart from the lower plate to form a venting flow path and having venting holes;
battery cell assemblies disposed on the support plate; and
a nitrogen gas system comprising a liquid nitrogen tank, a vaporizer, and a plurality of nitrogen gas injection ports, wherein
the plurality of nitrogen gas injection ports are disposed on at least one of the lower plate and the support plate.

2. The battery pack of claim 1, further comprising:
a venting device inserted through the side wall, wherein
the side wall has a hollow passage therein, and
the hollow passage is connected to the venting flow path and the venting device.

3. The battery pack of claim 2, wherein
the plurality of nitrogen gas injection ports comprises upper front injection ports, and
the upper front injection ports are disposed between the venting device and the battery cell assemblies on the support plate.

4. The battery pack of claim 2, wherein
the plurality of nitrogen gas injection ports comprises lower front injection ports, and
the lower front injection ports are disposed between the venting device and the battery cell assemblies on the lower plate.

5. The battery pack of claim 2, wherein
the plurality of nitrogen gas injection ports comprises upper side injection ports, and
the upper side injection ports are disposed between the side wall and the battery cell assemblies on the support plate.

6. The battery pack of claim 2, wherein
the plurality of nitrogen gas injection ports comprises lower side injection ports, and
the lower side injection ports are disposed between the side wall and the battery cell assemblies on the lower plate.

7. The battery pack of claim 2, wherein
the plurality of nitrogen gas injection ports comprises center injection ports, and
the center injection ports are disposed on a line extending from the center of the lower plate.

8. The battery pack of claim 2, further comprising:
a battery management system configured to control the nitrogen gas system based on at least one of voltage and temperature of the battery cell assemblies.

9. The battery pack of claim 8, wherein
when at least one of the voltage and temperature of the battery cell assemblies exceeds a threshold, the battery management system is configured to operate the venting device, vaporize the liquid nitrogen stored in the liquid nitrogen tank through the vaporizer, and spray it through the plurality of nitrogen gas injection ports.

10. The battery pack of claim 1, further comprising:
connection pipes connecting the vaporizer and the nitrogen gas injection ports, wherein
the connection pipes are disposed in the venting flow path.

11. An operating method of the battery pack of claim 1, comprising:
discharging venting gas generated from at least one of the battery cell assemblies to the outside of the battery pack through a venting device inserted through the side wall; and
spraying nitrogen gas through front nitrogen gas injection ports disposed between the venting device and the battery cell assemblies on either the support plate or the lower plate among the plurality of nitrogen gas injection ports.

12. The battery pack operating method of claim 11, further comprising:
discharging nitrogen gas by at least one nitrogen gas injection port disposed in a direction opposite to the venting device direction from the at least one of the battery cell assemblies.

13. The battery pack operating method of claim 11, wherein
the battery pack further comprises a battery management system configured to control the nitrogen gas system based on at least one of voltage and temperature of the battery cell assemblies, and
the steps of discharging the venting gas and spraying the nitrogen gas are controlled by the battery management system.
